# DEMANDE DE BREVET EUROPEEN

(11) **EP 3 578 401 A1**
(43) Date de publication de la demande: **11.12.2019**
(21) Numéro de dépôt: 18175906.9
(22) Date de dépôt: 05.06.2018
(51) Int. Cl.: B60J 7/057, B60J 7/043

(54) **PAVILLON VITRÉ À PANNEAU MOBILE CONTRÔLÉ PAR DES NAVETTES À DÉPLACEMENT SYNCHRONISÉ**

(71) Demandeur: Advanced Comfort Systems France SAS - ACS France, 79302 Bressuire Cedex (FR)
(72) Inventeur: WITKOWSKI, Romain, 49300 CHOLET (FR)
(74) Mandataire: Vidon Brevets & Stratégie

(57) **Abrégé**

L'invention concerne un pavillon vitré (11) de véhicule automobile, comprenant une partie fixe (111) et un panneau mobile (112) par rapport à la partie fixe (111), entre une position d'obturation, dans laquelle il obture une ouverture (13) formée dans ou à côté de ladite partie fixe (111), et au moins une position d'aération, dans laquelle l'ouverture (13) est au moins partiellement libérée, le déplacement du panneau mobile (112) étant mis en oeuvre à l'aide d'au moins un câble de commande (114, 114') configuré pour entraîner en translation une navette avant (210) et une navette arrière (220) à l'intérieur de deux rails de guidage (113, 113') placés au voisinage respectivement de chaque bord latéral dudit panneau mobile (112).

Selon l'invention, les première et deuxième navettes (210, 220) sont reliées de façon permanente entre elles par le biais de moyens de liaison (1140) souples.

## Description

### 1. Domaine de l'invention

Le domaine de l'invention est celui des véhicules automobiles, et notamment des véhicules présentant une surface vitrée importante, par exemple au niveau du pavillon.

Plus précisément, l'invention concerne de tels pavillons vitrés comprenant au moins une ouverture coopérant avec un panneau vitré mobile coulissant et entrebâillant, et en particulier des dispositifs connus sous le nom « baie flush », ou « toit ouvrant flush », conçus pour être montés de façon affleurante (ou quasi affleurante) avec la carrosserie.

Dans le cadre de la présente demande de brevet, on entend par le terme « panneau vitré » tout panneau, fixe ou mobile par rapport à la carrosserie, substantiellement transparent ou translucide, participant au clair de baie.

Un tel panneau peut être réalisé en verre ou en tout matériau adapté, tel que le polycarbonate.

Dans certains modes de réalisation, le panneau peut être constitué de plusieurs éléments affleurant entre eux, vu de l'extérieur.

Le cas échéant, au moins un de ces éléments peut être en tout ou en partie opaque, et par exemple en métal ou en plastique.

Par ailleurs, les bords d'un panneau vitré peuvent être opacifiés, par exemple par sérigraphie.

Un dispositif selon l'invention peut en outre équiper une baie formée dans une partie sensiblement horizontale autre que le pavillon du véhicule.

### 2. Techniques de l'art antérieur

Il est actuellement souhaité, dans le domaine des véhicules automobiles, de proposer de plus en plus de surfaces vitrées.

En particulier, on propose régulièrement des véhicules présentant un pavillon équipé d'un ou plusieurs éléments vitrés.

Dans certains cas, l'intégralité du pavillon est en verre, ou en un matériau similaire laissant passer la lumière, et notamment les rayons du soleil.

Des solutions ont également été proposées pour dégager une, voire plusieurs, ouvertures dans un tel pavillon, notamment pour former un toit ouvrant.

Le Demandeur a notamment proposé plusieurs solutions pour contrôler les mouvements d'un panneau mobile d'une baie flush ou d'un toit ouvrant flush.

Ces mouvements sont généralement complexes, puisque l'ouverture du panneau mobile nécessite tout d'abord un dégagement, par rapport à l'ouverture réalisée dans la partie fixe du pavillon, puis un coulissement, au-dessus ou en dessous de la partie fixe.

Il peut également être prévu que le panneau mobile soit entrebâillant, c'est-à-dire qu'il bascule par rapport à l'un de ses bords, généralement le bord orienté vers l'arrière du véhicule.

Il peut aussi être nécessaire, dans certains modes de réalisation, de contrôler le déplacement d'autres éléments, tel qu'un déflecteur, qui vient guider l'air au-dessus de l'ouverture, lorsque le panneau mobile est en position ouverte.

Il a été proposé des solutions qui permettent de transformer un mouvement d'actionnement simple, monodirectionnel, suivant par exemple une courbe, définie par exemple par le pavillon de manière à réaliser les différents mouvements d'un panneau mobile.

Pour ceci, il a été proposé de mettre en oeuvre, pour chaque rail de guidage solidarisé à la partie fixe du pavillon, une unique navette guidée en translation le long et à l'intérieur du rail de guidage correspondant.

La navette unique, dont le déplacement peut être aisément motorisé, par exemple à l'aide d'un câble de commande du type « push/pull », présente par exemple des gorges qui coopèrent avec des pions avant et arrière disposés sur chaque côté du panneau mobile.

Il a également été proposé de mettre en oeuvre des navettes avant et arrière dans chaque rail de guidage, chacune des navettes avant et arrière portant une gorge coopérant avec un pion solidaire d'un bord latéral du panneau mobile.

Dans ces deux approches, les navettes contrôlent une cinématique complexe, notamment à l'aide de lumières et/ou de gorges guidant des pions ou des biellettes agissant directement ou indirectement sur le panneau mobile, et, le cas échéant, sur un autre élément mobile, tel un déflecteur.

Ces navettes sont par exemple utilisées pour assurer le dégagement de la partie dirigée vers l'avant du panneau mobile et/ou son entrebâillement.

Lorsque le déplacement du panneau mobile met en oeuvre des navettes avant et arrière dans un même rail de guidage, une liaison rigide est prévue entre les navettes de manière à synchroniser leurs déplacements.

Toutefois, lorsque pavillon vitré (et donc les rails de guidage) présente un galbe prononcé, la mise en oeuvre d'une telle liaison rigide peut entrainer des à-coups, voire des blocages, des navettes à l'intérieur des rails de guidage.

Il existe donc un besoin alternatif à cette solution de l'art antérieur pour optimiser le guidage d'un panneau mobile d'un toit ouvrant.

### 3. Objectifs de l'invention

L'invention a notamment pour objectif de pallier ces inconvénients de l'art antérieur.

Plus précisément, l'invention a pour objectif de fournir, selon au moins un mode de réalisation, un dispositif vitré d'obturation d'une baie formée dans un véhicule automobile, et notamment un pavillon vitré, dans lequel le panneau mobile peut être entrebâillé ou déplacé en coulissement de façon simple, efficace et fiable, et ce indépendamment du galbe du pavillon vitré et des rails de guidage, par la mise en oeuvre de deux navettes guidées en translation dans chacun des deux rails de guidage.

Un autre objectif de l'invention est de fournir, selon au moins un mode de réalisation, une technique permettant d'assurer l'entrebâillement et le coulissement d'un panneau mobile qui soit facilement adaptable à des pavillons vitrés de dimensions variés.

Encore un autre objectif de l'invention est, selon au moins un mode de réalisation, de proposer une telle technique qui permette de simplifier la fabrication, le montage et/ou la maintenance du pavillon et de ses équipements, et donc de réduire les coûts correspondants.

### 4. Exposé de l'invention

Ces objectifs, ainsi que d'autres qui apparaîtront par la suite sont atteints à l'aide d'un vitré de véhicule automobile, comprenant une partie fixe et un panneau mobile par rapport à la partie fixe, entre une position d'obturation, dans laquelle il obture une ouverture formée dans ou à côté de ladite partie fixe, et au moins une position d'aération, dans laquelle ladite ouverture est au moins partiellement libérée, le déplacement dudit panneau mobile étant mis en oeuvre à l'aide d'au moins un câble de commande configuré pour entraîner en translation une navette avant et une navette arrière à l'intérieur de deux rails de guidage placés au voisinage respectivement de chaque bord latéral dudit panneau mobile.

Selon l'invention, lesdites première et deuxième navettes sont reliées de façon permanente entre elles par le biais de moyens de liaison souples.

Une telle liaison souple entre les navettes avant et arrière de chaque rail de guidage permet d'assurer un déplacement synchronisé des navettes avant et arrière lorsque ces dernières sont entrainées en translation par un câble de commande.

Ce mouvement simultané des navettes avant et arrière dans le rail de guidage correspondant agit sur le mécanisme de mise en mouvement du toit ouvrant, entre une position d'ouverture et une position de fermeture.

L'absence de pièce de liaison rigide entre les navettes avant et arrière permet un déplacement facilité de ces dernières dans les zones à forte courbure du rail de guidage (lorsque le pavillon vitré est galbé), de par la flexibilité de la liaison entre les navettes.

Ainsi, une telle liaison permet d'éviter le blocage des navettes dans le rail de guidage, quel que soit le galbe du pavillon vitré.

La solution de l'invention est simple, efficace et fiable, et permet en outre d'optimiser le guidage et/ou la tenue (lorsqu'il est déployé ou partiellement déployé) d'un tel panneau mobile.

Les moyens mis en oeuvre sont peu encombrants et de poids réduits, et permettent de simplifier la fabrication, le montage et/ou la maintenance du pavillon et de ses équipements, et donc de réduire les coûts correspondants.

Selon un mode de réalisation particulier, les moyens de liaison souples comprennent deux éléments de couplage espacés, solidarisés aux navettes avant et arrière respectivement, les deux éléments de couplage étant reliés par un élément souple.

L'espacement entre les deux navettes et la longueur de l'élément souple reliant ces dernières peut être adapté selon les dimensions et les valeurs de galbe du toit ouvrant

Selon un autre mode de réalisation particulier, les éléments de couplage sont insérés dans des orifices ménagés dans une paroi latérale des navettes avant et arrière respectivement.

L'assemblage des éléments de couplage aux navettes est aisé et fiable.

Selon un autre mode de réalisation particulier, les éléments de couplage espacés sont portés par ledit au moins un câble de commande, l'élément souple étant formé par la portion de câble de commande situé entre les deux élément de couplage.

Une telle solution est relativement simple à mettre en oeuvre, compacte et permet d'assurer une transmission uniforme des efforts de translation du câble de commande sur chacune des navettes avant et arrière, et de synchroniser le déplacement des navettes.

Selon un autre mode de réalisation particulier, les éléments de couplage sont surmoulés sur ledit au moins un câble de commande.

Le surmoulage des éléments de couplage sur le câble de commande permet d'obtenir à moindre coût une transmission homogène des efforts de translation du câble sur l'ensemble de mécanisme de mise en mouvement du toit ouvrant. Les éléments de couplage surmoulés sur le câble de manière sont peu encombrants et ne perturbent pas le déplacement en translation du câble.

La liaison souple entre les navettes peut être aisément adaptée à la structure du pavillon vitré, en fonction de sa longueur et de son galbe notamment. Une telle liaison souple permet de s'affranchir d'une pièce de liaison rigide particulière à chaque type de pavillon vitré ce qui permet de réduire les coûts de fabrication.

L'invention concerne également les véhicules automobiles équipés d'un pavillon vitré tel que décrit ci-dessus.

### 5. Liste des figures

D'autres caractéristiques et avantages de l'invention apparaîtront plus clairement à la lecture de la description suivante d'un mode de réalisation particulier de l'invention, donné à titre de simple exemple illustratif et non limitatif et des dessins annexés, parmi lesquels :
- les figures 1A et 1B représentent la partie supérieure de la carrosserie d'un véhicule automobile, équipé d'un dispositif d'obturation, en l'occurrence un pavillon vitré, selon l'invention :
   ▪ sur la figure 1A : le panneau vitré mobile est en position fermée ;
   ▪ sur la figure 1B : le panneau mobile est en position ouverte après coulissement ;
- la figure 2 est une vue partiellement éclatée d'un pavillon vitré, selon un mode de réalisation de l'invention, montrant les moyens assurant la mise en mouvement du panneau mobile ; et
- la figure 3 est une vue de détail, en perspective, des moyens assurant le mouvement du panneau mobile de la figure 2.

### 6. Description détaillée d'un mode de réalisation de l'invention

L'invention concerne donc un pavillon vitré de véhicule, et plus précisément le déplacement de celui-ci.

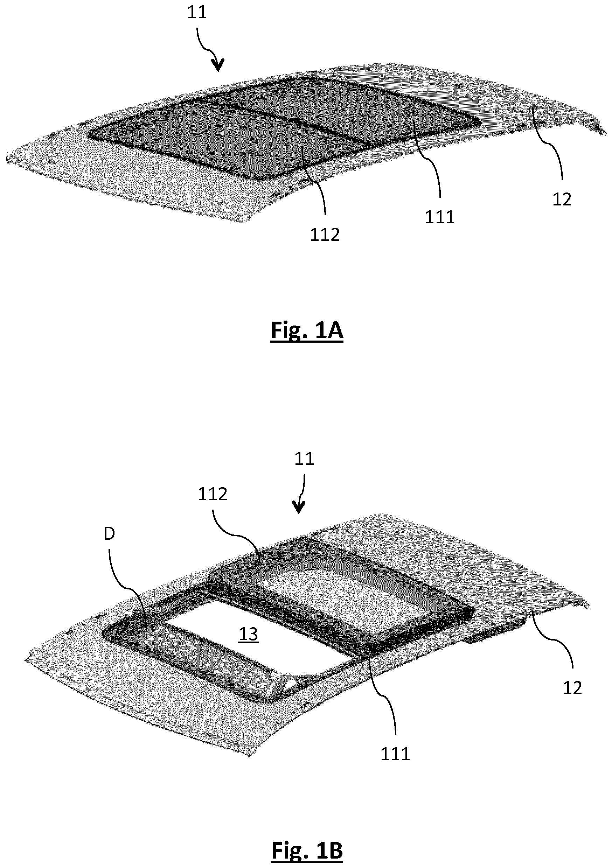

Comme illustré sur les figures 1A et 1B, le pavillon vitré est un ensemble 11 pré-assemblé comprenant :
- un panneau fixe 111, dont les bords sont dimensionnés pour être solidarisés, par exemple par collage, aux bords correspondant de la carrosserie 12 du véhicule, ou de son châssis, dont seule la partie supérieure est illustrée ;
- un panneau mobile 112, pouvant être déplacé par rapport au panneau fixe 111, pour obturer ou libérer une ouverture 13 définie à côté du panneau fixe 111 ;
- des moyens de déplacement décrits plus en détail par la suite (rails, pions, navettes, pistes, motorisation ...) permettant de contrôler le mouvement du panneau mobile 112.

De façon connue, en vue de libérer l'ouverture 13, le panneau mobile 112 est apte à être déplacé vers l'arrière du véhicule par coulissement dans des rails (non représentés) solidaires de la partie fixe 111 et situés de part et d'autre du panneau mobile 112.

Dans la position fermée du toit ouvrant illustrée par la figure 1A, le panneau mobile 112 se trouve dans le plan ou dans la continuité, du panneau fixe 111.

Il obture de façon étanche, des joints d'étanchéité (non illustrés) étant prévus à cet effet, l'ouverture ménagée dans le pavillon 11, et affleure avec le panneau fixe 111.

Il peut également être affleurant ou sensiblement affleurant avec le pare-brise du véhicule et avec une pièce ou élément transversal, par exemple une traverse.

Dans la position illustrée par la figure 1B, l'ouverture 13 est entièrement dégagée, le panneau mobile 112 ayant été déplacé par rapport au panneau fixe 111, et placé sensiblement parallèle à celui-ci à l'extérieur du véhicule.

La position ouverte du toit ouvrant, illustrée sur la figure 1B, à partir de la position fermée, illustrée par la figure 1A, se fait par un dégagement du panneau mobile 112 au-dessus de l'ouverture 13, notamment par louvoiement, puis par un déplacement en translation, ou coulissement, du panneau mobile 112 vers l'arrière du véhicule.

Outre ce mouvement d'ouverture du panneau mobile 112, on prévoit que le toit ouvrant peut être entrebâillé (position non représentée) pour ménager une ouverture d'aération ou de ventilation de l'habitacle du véhicule.

Cette approche permet notamment d'optimiser l'aérodynamisme du véhicule automobile.

Dans l'exemple illustré, le coulissement du panneau mobile 112 vers l'arrière du véhicule entraîne le déploiement d'un déflecteur D d'air destiné à améliorer le confort sonore dans l'habitacle de véhicule.

Il est à noter que les termes « plan », « parallèle », « transversal » et « perpendiculaire » doivent être interprétés de façon large.

En effet, comme il apparaît sur les figures, le pavillon 11 peut être sensiblement incurvé, dans une ou plusieurs directions.

Dans ce cas, le « plan » doit être interprété comme étant la surface de référence (incurvée) définie par le pavillon.

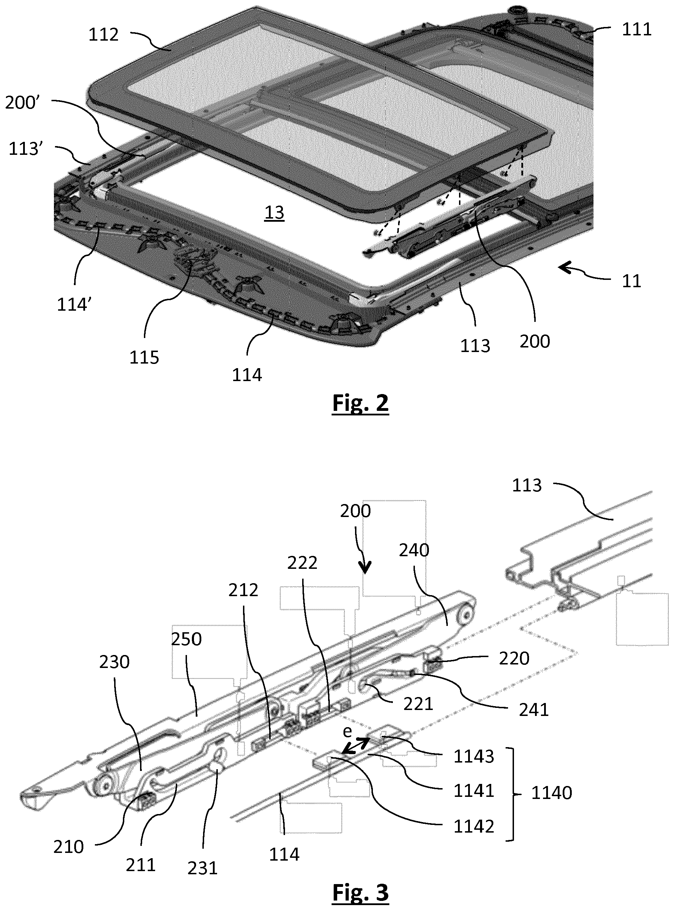

Ces différents mouvements du panneau mobile 112 sont contrôlés à partir de moyens de mise en mouvement 200, 200', illustrés sur la figure 2, qui sont mis en oeuvre de chaque côté du pavillon, le long et à l'intérieur de rails de guidage 113, 113' solidarisés à la partie fixe 111 du pavillon vitré 11, au voisinage respectivement de chaque bord latéral du panneau mobile 112.

Comme illustré sur la figure 3, qui est une vue focalisée sur les moyens de mise en mouvement 200 associés au rail de guidage 113 (le panneau mobile n'étant pas représenté par souci de clarté, seul le support 250 du panneau mobile étant illustré), les moyens de mise en mouvement 200 comprennent une première navette 210, dite navette avant, solidaire de la partie proximale du panneau mobile (la plus proche de l'avant du véhicule) et contrôlant le déplacement de cette partie proximale, et une deuxième navette 220, dite navette arrière, solidaire de la partie distale de ce même panneau mobile, opposée à la partie proximale.

De façon classique, le coulissement des moyens de mise en mouvement 200, 200' le long des rails de guidage 113, 113' est assuré par le biais de câbles de commande 114, 114', de type "push pull", eux même entrainés par des moyens motorisés 115 commandés par un utilisateur.

Les câbles de commande 114, 114' sont guidés en translation dans un profilé tubulaire visible sur la figure 3 et s'étendant parallèlement au rail de guidage 113 correspondant.

Comme illustré sur la figure 3, les navettes avant et arrière 210, 220 présentent chacune plusieurs lumières ou pistes 211, 221 dans lesquelles se déplacent des pions 231, 241 portés par des leviers de support 230, 240 du panneau mobile qui contrôlent le déplacement de ce dernier entre une position d'obturation, dans laquelle il obture l'ouverture formée la partie fixe, et au moins une position d'aération, dans laquelle l'ouverture est au moins partiellement libérée.

Les leviers de support 230, 240 sont reliés, de manière pivotante, au support 250 sur lequel est fixé le panneau mobile 112.

La forme des pistes dans lesquelles se déplacent les pions, et donc la cinématique d'ouverture et de fermeture du panneau mobile, n'est pas décrite ici en détail et n'est pas limitée à l'exemple illustré (le nombre de pistes et leurs formes pour chacune des navettes avant et arrière pouvant varier).

On comprend que les moyens de mise en mouvement 200' associés au rail de guidage 113' sont symétriques aux moyens de mise en mouvement 200 associés au rail de guidage 113.

Avantageusement, l'invention prévoit de relier de façon permanente les navettes avant et arrière 210, 220 des moyens de mise en mouvement 200 par des moyens de liaison 1140 souples.

Il en est de même pour les moyens de mise en mouvement 200' associés au rail de guidage 113'.

De tels moyens de liaison 1140 souples permettent d'assurer un déplacement linéaire homogène et simultané des navettes avant et arrière 210, 220 dans le rail de guidage 113 lorsque les navettes assurent le passage d'une position ouverte à une position fermée du panneau mobile, et inversement.

La souplesse, ou flexibilité, des moyens de liaison 1140 permet en outre de conserver un déplacement homogène et simultané des navettes lorsque le pavillon vitré, et donc les rails de guidage, présentent un galbe prononcé.

En effet, une telle liaison souple permet d'éviter que les navettes avant et arrière se déplacent par à-coups, voire se bloquent dans les zones présentant un fort galbe.

Tel qu'illustré, le câble de commande 114 présente deux éléments de couplage 1142, 1143 espacés destinés à être assemblés aux navettes avant et arrière 210, 220 respectivement. Ces deux éléments de couplage 1142, 1143 sont reliés par un élément souple 1141 qui est constitué par une portion du câble de commande 114.

L'élément de couplage 1143 est situé à l'extrémité du câble de commande 114.

En d'autres termes, le câble de commande 114, qui est souple, est constamment solidaire des navettes avant et arrière 210, 220, par le biais des éléments de couplage 1142, 1143 portés par le câble de commande 114.

Une telle configuration de la liaison permet d'assurer une transmission uniforme des efforts de translation du câble de commande 114 sur chaque navette 210, 220.

Une telle liaison permet en outre d'assurer une meilleure solidarisation entre le câble de commande 114 et les moyens de mise en mouvement 200.

Par exemple, en cas d'impact frontal du véhicule, la présence d'une double accroche du câble de commande sur les navettes permet de minimiser les risques que le câble de commande et les navettes ne se désolidarisent, ce qui pourrait provoquer l'éjection du panneau mobile.

Le premier élément de couplage 1142 est configuré pour être introduit dans un premier orifice 212 de réception ménagé dans la première navette 210 et le deuxième élément de couplage 1143 est configuré pour être introduit dans un deuxième orifice 222 de réception ménagé dans la deuxième navette 220. Plus précisément, les premier et deuxième éléments de couplage 1142, 1143 sont insérés avec un jeu minimum, voire nul, dans les premier et deuxième orifices 212, 222 respectivement.

Tel qu'illustré, les orifices 212, 222, de réception des éléments de couplage 1142, 1143, sont ménagés sur les parois latérales des navettes avant et arrière 210, 220 respectivement, du côté du câble de commande 114.

Un tel agencement permet de simplifier l'assemblage des éléments de couplage 1142, 1143, et donc du câble de commande, sur les navettes 210, 220.

Les éléments de couplage 1142, 1143 présentent une forme identique sensiblement parallélépipédique dont l'épaisseur correspond sensiblement à celle du câble de commande 114.

Par ailleurs, la longueur de l'élément souple 1141 correspond à la valeur de l'écartement « e » entre le premier élément de couplage 1142 et le deuxième élément de couplage 1143.

Cette écartement « e » entre les éléments de couplage 1142, 1143 est déterminé de manière à assurer un déplacement linéaire homogène et simultané des navettes avant et arrière 210, 220.

Cette valeur d'écartement « e » est choisie selon les dimensions et le galbe du pavillon vitré sur lequel les moyens de mise en mouvement 200 sont destinés à être montés.

Dans le mode de réalisation illustré, les éléments de couplage 1142, 1143 sont obtenus par un procédé de surmoulage sur le câble de commande 114 de sorte à former un ensemble monobloc de faible encombrement.

Dans ce mode de réalisation, les éléments de couplage 1142, 1143 sont réalisés en polymère. Plus précisément, ces éléments sont réalisés en polyamide, à savoir en PA66-CF40. Toutefois, dans des modes de réalisation alternatifs, les éléments de couplage peuvent être réalisés en tout autre matériau.

Dans un mode de réalisation particulier, le câble de commande porte plus de deux éléments de couplage de sorte à optimiser la solidarisation et/ou la répartition des efforts du câble sur les navettes (les navettes peuvent dans ce cas comprendre plusieurs orifices de réception des éléments de couplage).

Dans des alternatives de mise en oeuvre, les éléments de couplage peuvent être solidarisés au câble de commande par collage, soudage, encliquetage ou tout autre procédé permettent d'en assurer la fixation tout en garantissant le coulissement du câble de commande dans le rail de guidage.

Dans un mode de réalisation particulier de l'invention, la liaison souple permanente entre les éléments de couplage est un élément souple distinct du câble de commande (dans ce cas, le câble de commande pourrait être relié à une des navettes, et les navettes reliées entre elles par un élément souple distinct portant deux éléments de couplage espacés).

## Revendications

1. Pavillon vitré (11) de véhicule automobile, comprenant une partie fixe (111) et un panneau mobile (112) par rapport à la partie fixe (111), entre une position d'obturation, dans laquelle il obture une ouverture (13) formée dans ou à côté de ladite partie fixe (111), et au moins une position d'aération, dans laquelle ladite ouverture (13) est au moins partiellement libérée,
le déplacement dudit panneau mobile (112) étant mis en oeuvre à l'aide d'au moins un câble de commande (114, 114') configuré pour entraîner en translation une navette avant (210) et une navette arrière (220) à l'intérieur de deux rails de guidage (113, 113') placés au voisinage respectivement de chaque bord latéral dudit panneau mobile (112), **caractérisé en ce que** lesdites première et deuxième navettes (210, 220) sont reliées de façon permanente entre elles par le biais de moyens de liaison (1140) souples.

2. Pavillon vitré (11) selon la revendication 1, **caractérisé en ce que** les moyens de liaison (1140) souples comprennent deux éléments de couplage (1142, 1143) espacés, solidarisés aux navettes avant et arrière (210, 220) respectivement, les deux éléments de couplage (1142, 1143) étant reliés par un élément souple (1141).

3. Pavillon vitré (11) selon la revendication 2, **caractérisé en ce que** lesdits éléments de couplage (1142, 1143) sont insérés dans des orifices (212, 222) ménagés dans une paroi latérale desdites navettes avant et arrière (210, 220) respectivement.

4. Pavillon vitré (11) selon la revendication 2 ou 3, **caractérisé en ce que** lesdits éléments de couplage (1141, 1142) espacés sont portés par ledit au moins un câble de commande (114), ledit élément souple (1140) étant formé par la portion de câble de commande (114) situé entre les deux élément de couplage (1141, 1142).

5. Pavillon vitré (11) selon la revendication 4, **caractérisé en ce que** lesdits éléments de couplage (1141, 1142) sont surmoulés sur ledit au moins un câble de commande (114).

6. Véhicule automobile comprenant un pavillon vitré (11) selon l'une quelconque des revendications 1 à 5.

## Revendications modifiées

### Revendications modifiées conformément à la règle 137(2) CBE.

1. Pavillon vitré (11) de véhicule automobile, comprenant une partie fixe (111) et un panneau mobile (112) par rapport à la partie fixe (111), entre une position d'obturation, dans laquelle il obture une ouverture (13) formée dans ou à côté de ladite partie fixe (111), et au moins une position d'aération, dans laquelle ladite ouverture (13) est au moins partiellement libérée,
le déplacement dudit panneau mobile (112) étant mis en œuvre à l'aide d'au moins un câble de commande (114, 114') configuré pour entraîner en translation une navette avant (210) et une navette arrière (220) à l'intérieur de deux rails de guidage (113, 113') placés au voisinage respectivement de chaque bord latéral dudit panneau mobile (112), lesdites première et deuxième navettes (210, 220) étant reliées de façon permanente entre elles par le biais de moyens de liaison (1140) souples,
**caractérisé en ce que** lesdits moyens de liaison (1140) souples comprennent deux éléments de couplage (1142, 1143) espacés, solidarisés aux navettes avant et arrière (210, 220) respectivement, les deux éléments de couplage (1142, 1143) étant reliés par un élément souple (1141),
et **en ce que** lesdits éléments de couplage (1142, 1143) espacés sont portés par ledit au moins un câble de commande (114), ledit élément souple (1140) étant formé par la portion de câble de commande (114) située entre les deux éléments de couplage (1141, 1142).

2. Pavillon vitré (11) selon la revendication 1, **caractérisé en ce que** lesdits éléments de couplage (1142, 1143) sont insérés dans des orifices (212, 222) ménagés dans une paroi latérale desdites navettes avant et arrière (210, 220) respectivement.

3. Pavillon vitré (11) selon la revendication 1, **caractérisé en ce que** lesdits éléments de couplage (1141, 1142) sont surmoulés sur ledit au moins un câble de commande (114).

4. Véhicule automobile comprenant un pavillon vitré (11) selon l'une quelconque des revendications 1 à 3.
